# EUROPEAN PATENT APPLICATION

(11) **EP 4 840 721 A1**
(43) Date of publication of application: **18.11.2026**
(21) Application number: 25382496.5
(22) Date of filing: 16.05.2025
(51) Int. Cl.: B61L 15/00, B61L 27/20, B61L 27/53, B61L 27/70, B60M 1/28

(54) **A METHOD FOR RE-ESTABLISHING A RADIO LINK CONNECTION AMONG A RAILWAY VEHICLE AND A TRAIN CONTROL INSTANCE**

(71) Applicant: Siemens Rail Automation S.A.U., 28760 Tres Cantos (Madrid) (ES)
(72) Inventor: Morente Morente, Oscar, 28806 Alcalá de Henares (ES)
(74) Representative: Siemens Patent Attorneys

(57) **Abstract**

It is the objective of the present invention to provide a method for re-establishing a radio link connection among a railway vehicle and a train control instance that provides further improvements to the availability of the radio linkage at low investment and maintenance costs.

These objectives are achieved according to the present invention by a method for re-establishing a radio link connection among a railway vehicle and a train control instance, such as a radio block center within an ETCS environment, comprising the steps of:
a) providing a communication network for enabling the radio link connection among the railway vehicle and the train control instance, such as an interlocking system, a dispositive train control system, a radio block center and/or other train communication resources, such as a direct communication of the train driver with a train operation center, an emergency channel, a maintenance site, etc., said communication network comprising a number of base stations and/or communication components being controlled by a communication control system; said base stations and/or communication components being placed in proximity to a railway track thereby enabling the radio link connection among the railway vehicles and the train control component when the railway vehicles cruises along the railway track;
b) controlling the correct functioning of the base stations and/or radio repeaters by the communication control system and in case of the malfunctioning of a base station and/or a communication component, determining the malfunctioning base station and/or communication component;
c) a fleet of drones being equipped with communication modules being capable of replacing the functionality of a malfunctioning base station and/ communication components. and/or communication component;
d) sending a drone of said fleet of drones into the proximity of the malfunctioning base station and/or communication component;
e) logging-in the communication instance into the communication network thereby replacing the malfunctioning base station and/or communication component.

Thus, the present method enables solutions to re-establish a radio link in a railway communication network at comparably low cost. The communication instance borne by the drone will take-over the functionalities of the communication component that is currently under failure.

## Description

The present invention relates to a method for re-establishing a radio link connection among a railway vehicle and a train control instance.

In modern railway systems, the securing and controlling of the trains circulation currently changes from rail-side signaling to cab signaling. The information of the relevant signaling data for the train circulation is provided on a display to the driver wherein the display forms part of the so-called onboard unit (OBU). Said vehicle-sided equipment receives its data from track-side transponders, such as Balises and/or leakage cable and/or via a radio link from a train control instance.

In the current transformation, the European Train Control System (ETCS) with its implementation levels **1,** 2 and 3 plays a major role for the future train signaling strategy. As of ETCS level **2,** there does not exist any longer any trackside signaling from light signals. All data relevant to the movement of the trains, such as individual break curves, speed profiles, movement authority (MA), end of movement authority (EoA) and the like, are transmitted from the dispositive train control center to a radio block center (RBC) and via a radio link to the antenna of the onboard unit. For this radio link, a number of railway enterprises use a specific mobile communication standard, as for example the GSM-R system in Switzerland, that is based on the public GSM communication standard but comprises a specific railway communication infrastructure that is only authorized for users within. Another proprietary communication system in this sense could be for example TETRA or TETRAPOL which are both communication systems exclusively used by and restricted to blue light organisations (police, fire brigade, ambulance), civil protection and the like.

Thus, it is highly important for the safety and the efficiency of the train circulation that the radio link among the railway vehicle and the train control instances **(i.e.** interlocking, dispositive train control system, radio block center) and/or other train communication resources, like for example a direct communication of the train driver with a train operation center, emergency channel, maintenance staff, etc.) is present at all the time when the trains are circulating on the railway network. Nonetheless, it may happen that the loss of mobile communications (a so-called Radio hole) on the railway network may occur due to the breakdown of a radio transmitter, a base station, the RBC or the like.

To address this issue, railway network operators are implementing a range of strategies:
i) Signal Repeaters: These devices amplify the radio signal and retransmit it, improving coverage in areas where the normal signal is weak (for example, due to topographical implications;
ii) Directional Antennas: These array antennas are used to direct the radio signal towards specific areas, which helps to improve coverage in these areas;
iii) Network Infrastructure Improvement: This could include installing more radio towers or upgrading the network technology to provide better coverage; and
iv) MIMO (Multiple Input, Multiple Output) technology: This technology uses multiple antennas at both the transmitter and receiver to improve the quality of the signal.

Any improved quality of service and/or redundancy of the communication infrastructure along the railway line are not available for free. Both investments and maintenance request their attention and costs.

It is therefore the objective of the present invention to provide a method for re-establishing a radio link connection among a railway vehicle and a train control instance that provides further improvements to the availability of the radio linkage at low investment and maintenance costs.

These objectives are achieved according to the present invention by a method for re-establishing a radio link connection among a railway vehicle and a train control instance, such as a radio block center within an ETCS environment,
comprising the steps of:
a) providing a communication network for enabling the radio link connection among the railway vehicle and the train control instance, such as an interlocking system, a dispositive train control system, a radio block center and/or other train communication resources, such as a direct communication of the train driver with a train operation center, an emergency channel, a maintenance site, **etc.,** said communication network comprising a number of base stations and/or communication components being controlled by a communication control system; said base stations and/or communication components being placed in proximity to a railway track thereby enabling the radio link connection among the railway vehicles and the train control component when the railway vehicles cruises along the railway track;
b) controlling the correct functioning of the base stations and/or radio repeaters by the communication control system and in case of the malfunctioning of a base station and/or a communication component, determining the malfunctioning base station and/or communication component;
c) a fleet of drones being equipped with communication modules being capable of replacing the functionality of a malfunctioning base station and/ communication components.;
d) sending the drone into the proximity of the malfunctioning base station and/or communication component;
e) logging-in the communication instance borne by the drone into the communication network thereby replacing the malfunctioning base station and/or communication repeater.

Thus, the present method enables solutions to re-establish a radio link in a railway communication network at comparably low cost. The communication instance borne by the drone will take-over the functionalities of the communication component that is currently under failure. Thus, the radio hole in the communication network that may cause severe implications to the safety and the efficiency of the railway circulation can be eliminated within a very short period of time thereby bridging the time required for the RAMS team to replace the communication component in failure and thereby also immediately filling the radio hole caused by the communication component in mal-functioning/failure.

To ensure the drone remains in a stable position, the present method can provide in a preferred embodiment for a landing platform for the drone at the base stations and/or communication component and/or at a line-side electronic unit thereby allowing the drone to land and reside on the landing platform. In addition, the drone can be fixed to this landing platform by mechanical means and/or magnetic means and the like which secures the drone in its landed position and allows the safe operation of the communication instance borne by the drone.

Since the electrical power that has to be borne by the drone in terms of batteries and/or fuel cell etc. has a specific weight, a further preferred embodiment of the present invention can provide for the landing platform to comprise a wireless charging system for providing electric energy to the drone and/or the communication instance. Therefore, the provision of the electrical charging power usually comes hand in hand with the provision of the base stations and/or communication component and/or at a line-side electronic unit and/or a railway component supplied by this LEU, such as a light signal, an axle counter system, a point switch motor and the like, which all need to be aligned with power supply means anyway.

Further, there exist also the possibility to align the power supply of the drone and/or the communication instance with the electric power available in the catenary system. A possible option for this energy supply is to place a coupling coil around the catenary wire. In one preferred embodiment of the present invention, the drone will hover above the catenary wire and drops a coupling coil onto the catenary wire that will then embrace the catenary wire with a cylindrical insulation layer surrounding the catenary wire first and the coil windings winding outside around the insulation layer.

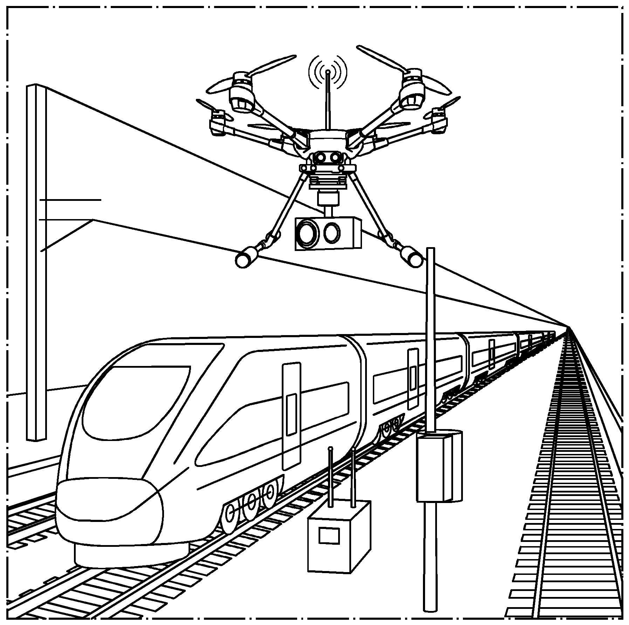

Preferred embodiment of the present invention will be explained in more detail hereinafter with reference to attached drawing which depicts in the figure a schematic illustration of the step of providing a drone being equipped with a communication instance along a railway track.

The figure schematically shows an illustration of the step of providing a drone being equipped with a communication instance along a railway track. This step forms part of the method according to the present invention with the objective to re-establishing a radio link connection among a railway vehicle and a train control instance, such as a radio block center within an ETCS environment.

In general, in modern train control systems, such as the European Train Control System ETCS, a communication network is provided for enabling the radio link connection among the railway vehicle and the train control instance. In particular, the ETCS is a multi-lateral train protection system being designed to replace the many incompatible national legacy systems used by the European railway operators as well as railway operators outside of Europe. The ETCS is the signaling and control component of the European Rail Traffic Management System (ERTMS) and comprises as major parts trackside equipment, in particular Balise transponders, and on board (on train) equipment, like the onboard unit OBU in the cab signaling.

To facilitate communication between railway vehicles and the train control system, the current communication network includes multiple base stations and/or communication components being controlled by a communication control system. This communication network works similarly to a public mobile phone network, but the use is restricted to the specific users and needs of the railway operators, such as GSM-R in Switzerland etc. Suitably, the base stations and/or communication components are placed in proximity to a railway track thereby enabling the radio link connection among the railway vehicles and the train control component when the railway vehicles cruises along the railway track. Via this radio link, the cab signaling receives all the relevant data which is required for the cruise of the train. Typical data are for example data related to speed profile, breaking curves, topological information, movement authority, end of movement authority and the like.

During the operation of the railway network, the correct functioning of the base stations and/or communication components is controlled by the communication control system and in case of the malfunctioning of a base station and/or a communication component, this instance also determines the malfunctioning base station and/or communication component, if any.

To address potential failures in communication resources, a fleet of drones equipped with communication modules is deployed wherein this communication instance is enabled to replace the functionality of the malfunctioning base station and/or communication component. This drone is then commissioned into the proximity of the malfunctioning base station and/or communication component. Either direct when starting or when arriving at the target position or even in between, the communication instance will log-on into the communication network thereby replacing the malfunctioning base station and/or communication repeater.

The Radio Hole that has occurred due to the breakdown or inhibition in the antennas or BSC of the railway mobile network is remedied. This affects the railway traffic in a positive way because otherwise the loss of communication with different track equipment leads to the use of less effective procedures which can ultimately lead to the loss of operation of that line or even in more manual procedures that decrease system performance and can even affect safety in operation.

Thus, the present invention helps to avoid this situation to the maximum and minimizes the period of any disablement due to the failure. The drones that are equipped with the communication instance, such as the means to operate mobile network antennas as well as means for satellite communication, can be used. They can be allocated in the area where the Radio Hole has occurred and solve this lack of mobile coverage until the maintenance services can resolve the problem.

To support the secure positioning of drones in relation to the railway environment, a landing platform is provided for the drone at the base stations and/or communication component and/or at a line-side electronic unit thereby allowing the drone to land and reside on the landing platform. Additionally, since the drone and in particular the communication instance require a non-negligible amount of electric energy for its operation, the landing platform comprises a wireless charging system for providing electric energy to the drone and/or the communication instance. Thus, the drone and/or the communication instance borne by the drone are supplied with electric energy without any fear of shortage or the like. Usually, all the named components comprise for the fulfillment of their tasks an electric supply which can easily be used to also power the drone and/or the communication instance borne by the drone.

Further, it could be also possible to benefit from the electric energy that is available along the railway line in the respective catenary system. Thus, the power supply of the drone and/or the communication instance can be aligned with the electric power available in the catenary system of the railway track. A possible option for this energy supply is to place a coupling coil around the catenary wire. In one preferred embodiment of the present invention, the drone will hover above the catenary wire and drops a coupling coil onto the catenary wire that will then embrace the catenary wire with a cylindrical insulation layer surrounding the catenary wire first and the coil windings winding outside around the insulation layer.

## Claims

1. A method for re-establishing a radio link connection among a railway vehicle and a train control instance, such as a radio block center within an ETCS environment,
comprising the steps of:
a) providing a communication network for enabling the radio link connection among the railway vehicle and the train control instance, such as an interlocking system, a dispositive train control system, a radio block center and/or other train communication resources, such as a direct communication of the train driver with a train operation center, an emergency channel, a maintenance site, etc., said communication network comprising a number of base stations and/or communication components being controlled by a communication control system; said base stations and/or communication components being placed in proximity to a railway track thereby enabling the radio link connection among the railway vehicles and the train control component when the railway vehicles cruises along the railway track;
b) controlling the correct functioning of the base stations and/or radio repeaters by the communication control system and in case of the malfunctioning of a base station and/or a communication component, determining the malfunctioning base station and/or communication component;
c) a fleet of drones being equipped with communication modules being capable of replacing the functionality of a malfunctioning base station and/ communication components. and/or communication component;
d) sending a drone of said fleet of drones into the proximity of the malfunctioning base station and/or communication component;
e) logging-in the communication instance into the communication network thereby replacing the malfunctioning base station and/or communication component.

2. The method according to claim **1,** comprising the step of providing a landing platform for the drone at the base stations and/or communication component and/or at a line-side electronic unit thereby allowing the drone to land and reside on the landing platform.

3. The method according to claim 1 or **2,** wherein the landing platform comprises a wireless charging system for providing electric energy to the drone and/or the communication instance.

4. The method according to any of the preceding claims,
comprising the step of aligning the power supply of the drone and/or the communication instance with the electric power available in the catenary system of the railway track.
